(19) Europäisches Patentamt
European Patent Office
Office européen des brevets

(11) **EP 2 631 258 B1**

(12) **EUROPEAN PATENT SPECIFICATION**

(45) Date of publication and mention
of the grant of the patent:
**05.06.2019 Bulletin 2019/23**

(51) Int Cl.:
*C08G 69/26* (2006.01)    *C08L 77/06* (2006.01)
*C08G 69/42* (2006.01)    *H01L 33/00* (2010.01)

(21) Application number: **10858706.4**

(86) International application number:
**PCT/KR2010/009535**

(22) Date of filing: **29.12.2010**

(87) International publication number:
**WO 2012/053699 (26.04.2012 Gazette 2012/17)**

(54) **POLYAMIDE RESIN**

POLYAMID-HARZ

RÉSINE DE POLYAMIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.10.2010 KR 20100101595**

(43) Date of publication of application:
**28.08.2013 Bulletin 2013/35**

(73) Proprietor: **Lotte Advanced Materials Co., Ltd.
Yeosu-si
Jeollanam-do (KR)**

(72) Inventors:
• **JANG, Seung Hyun**
**Uiwang-si**
**Gyeonggi-do 437-711 (KR)**
• **JIN, Young Sub**
**Uiwang-si**
**Gyeonggi-do 437-711 (KR)**
• **KWON, So Young**
**Uiwang-si**
**Gyeonggi-do 437-711 (KR)**
• **IM, Sang Kyun**
**Uiwang-si**
**Gyeonggi-do 437-711 (KR)**
• **LEE, Myung Ryul**
**Uiwang-si**
**Gyeonggi-do (KR)**
• **JANG, Bok Nam**
**Uiwang-si**
**Gyeonggi-do 437-711 (KR)**
• **KIM, Yong Tae**
**Uiwang-si**
**Gyeonggi-do 437-711 (KR)**

(74) Representative: **Lang, Johannes et al
Bardehle Pagenberg Partnerschaft mbB
Patentanwälte, Rechtsanwälte
Prinzregentenplatz 7
81675 München (DE)**

(56) References cited:
EP-A1- 1 988 113          EP-A1- 2 354 176
EP-A1- 2 410 020          WO-A1-92/12194
WO-A1-94/20564            WO-A1-2006/112300
WO-A1-2006/135841         WO-A1-2009/153531
DE-A1- 2 449 713          KR-A- 20040 037 272
KR-A- 20090 021 132       KR-A- 20090 123 885
KR-B1- 0 168 468          US-A- 3 696 074

**Description**

[Technical Field]

The present invention relates to a polyamide resin having excellent melt processability, low water absorptivity and excellent brightness. More particularly, the present invention relates to a polyamide resin having excellent processability, heat resistance, low water absorptivity and improved brightness by employing two kinds of aliphatic diamines having specific number of carbon atoms.

[Background Art]

Generally, nylon 66 and nylon 6 are well known polyamide resins. These aliphatic polyamides are widely used in automobile components, electric and electronic products, and mechanical parts. However, aliphatic polyamides do not have sufficient thermal stability to be employed in fields requiring high heat resistance.

Aromatic polyamides have higher melting temperature and heat resistance than aliphatic polyamides. However, due to high melting point, aromatic polyamides have restricted processibility.

US Patent Publication No. 2009/0054620 disclosed preparation of meta-type polyamine resins through reaction of m-phenylenediamine and isophthalic chloride to improve melt processability of meta-type polyamide resins over para-type polyamides. However, processability is not sufficiently improved due to the high melting point of the aromatic polyamide resins.

US Patent No. 5,102,935 disclosed some attempts to improve melt processability by copolymerizing polyamides and oligomer esters. However, the copolymers have a disadvantage in that the main chain of the copolymer can be degraded by hydrolysis of an oligomer ester group, causing deterioration in thermal stability.

US Patent Publication No. 2008/0249238 discloses a method for improving melt processability by adding plasticizers to polyamide resins. However, it was found that such a method results in deterioration in thermal and mechanical properties.

Japanese Patent Laid-Open Publication No. 2002/293926 discloses polyamides having improved moldability, low water absorptivity, chemical resistance, strength and heat resistance by employing 1,10-diaminodecane as a diamine component. However, although such a method can improve chemical resistance and heat resistance to some degree, the method allows only slight increase in flowability and water absorptivity and no improvement in brightness.

WO,A,2006 135841 discloses light-emitting diode assembly housing based on high temperature polyamide compositions.

Currently, although various attempts have been made to improve moldability and water absorptivity, polyamide resins developed up to now show slight increase in water absorptivity and have some problems in terms of brightness of final molded articles. Specifically, in order for the polyamide resins to be employed in products such as LED reflectors or plastic joint parts, the polyamide resins require high brightness.

Therefore, there is a need for polyamide resins having not only excellent processability, heat resistance, mechanical strength and low water absorptivity, but also excellent brightness.

[Disclosure]

[Technical Problem]

It is one aspect of the present invention to provide a polyamide resin having not only excellent melt processability and low absorptivity but also excellent brightness.

It is another aspect of the present invention to provide a polyamide resin having excellent balance of physical properties, such as melt processability, heat resistance, mechanical strength, low water absorptivity, and brightness.

It is a further aspect of the present invention to provide a polyamide resin having excellent appearance and color realization.

It is yet another aspect of the present invention to provide a polyamide resin having an intrinsic viscosity of 0.3 dL/g to 4.0 dL/g.

It is yet another aspect of the present invention to provide a polyamide resin suitable to be employed in an LED reflector requiring high brightness.

The polyamide resin of the invention is defined by claims 1 and 2 to 9, whilst the LED reflector is disclosed by claim 10.

The above and other aspects may be accomplished by the present invention described below.

[Technical Solution]

In accordance with the present invention, a polyamide resin comprises a polymer of (A) an aliphatic diamine and (B) a dicarboxylic acid, wherein the (A) aliphatic diamine comprises (a1) a first aliphatic diamine monomer selected from at least one of C4, C6, C8 and C10 aliphatic diamines and (a2) a second aliphatic diamine monomer selected from at least one of C12, C14, C16 and C18 aliphatic diamine; and the polymer has excellent melt processability, low water absorptivity and excellent brightness.

The (a2) second aliphatic diamine monomer is present in an amount of 2 mol% to 50 mol% in the total aliphatic diamine (A) components.

A mole ratio of the total mole of the (a1) first aliphatic diamine monomer and the (a2) second aliphatic diamine monomer to the total mole of the (B) dicarboxylic acid monomer, (a1+a2)/(B), ranges from 0.90 to 1.30.

In one embodiment, the (a1) first aliphatic diamine monomer may be 1,10-decanediamine, and the (a2) second aliphatic diamine monomer may be 1,12-dodecanediamine.

In one embodiment, at least one of the (a1) first aliphatic diamine monomer and the (a2) second aliphatic diamine monomer may be a branched alkyl group.

In another embodiment, both the (a1) first aliphatic diamine monomer and the (a2) second aliphatic diamine monomer may include a linear alkyl group.

In one embodiment, the (B) dicarboxylic acid may include an aromatic dicarboxylic acid.

Examples of the (B) dicarboxylic acid may include terephthalic acid, isophthalic acid, 2,6-naphthalene dicarboxylic acid, 2,7-naphthalene dicarboxylic acid, 1,4-naphthalene dicarboxylic acid, 1,4-phenylene dioxyphenylene acid, 1,3-phenylenedioxy-diacetic acid, diphenic acid, 4,4'-oxybis(benzoic acid), diphenylmethane-4,4'-dicarboxylic acid, diphenylsulfone-4,4'dicarboxylic acid and 4,4'-diphenylcarboxylic acid.

In another embodiment, the (B) dicarboxylic acid may be a mixture of an aromatic dicarboxylic acid and an aliphatic dicarboxylic acid.

The polyamide resin may have an end group capped with an end capping agent selected from aliphatic carboxylic acids and aromatic carboxylic acids.

Examples of the end capping agent may include acetic acid, propionic acid, butyric acid, valeric acid, caproic acid, caprylic acid, lauric acid, tridecanoic acid, myristic acid, palmitic acid, stearic acid, pivalic acid, isobutyric acid, benzoic acid, toluic acid, $\alpha$-naphthalene carboxylic acid, $\beta$-naphthalene carboxylic acid, and methylnaphthalene carboxylic acid.

The polyamide resin may have an intrinsic viscosity at 25°C of 0.3 dL/g to 4.0 dL/g in 98% sulfuric acid solution at 25°C as measured using an Ubbelohde viscometer.

A ratio of tensile strength of the polyamide resin after treatment at 80°C and 95% RH for 24 hours to tensile strength thereof before treatment at 80°C and 95% RH for 24 hours may be about 89% or more, and a water absorption rate of the polyamide resin after treatment at 80°C and 80% RH for 48 hours may be about 0.9% or less.

[Advantageous Effects]

The polyamide resin according to the present invention is suitable for LED reflectors and plastic joints among automobile components, which require excellent appearance, excellent color realization, and excellent balance of physical properties, such as processability, heat resistance, mechanical strength, low water absorptivity and brightness.

[Best Mode]

Embodiments of the present invention will be described in more detail. These embodiments are provided for illustration only and are not to be in any way construed as limiting the present invention. The present invention is only defined by the scope of the claims described below.

The polyamide resin of the present invention is a polymer of (A) an aliphatic diamine; and (B) a dicarboxylic acid, wherein the (A) aliphatic diamine includes two or more different aliphatic diamine monomers (a1, a2). Namely, both the (a1) first aliphatic diamine monomer and the (a2) second aliphatic diamine monomer include an even number of carbon atoms, which leads to much higher heat resistance than the combination of even number-odd number of carbon atoms or odd number-odd number of carbon atoms.

In one embodiment, the (A) aliphatic diamine comprises (a1) at least one first aliphatic diamine monomer selected from C4, C6, C8 and C10 aliphatic diamines and (a2) at least one second aliphatic diamine monomer selected from C12, C14, C16 and C18 aliphatic diamine.

The second aliphatic diamine monomer is more flexible than the first aliphatic diamine monomer, thereby contributing to better melt processability.

The (a2) second aliphatic diamine monomer may be present in an amount of 2 mol% to 50 mol% in the total aliphatic diamine (A) component. In another embodiment, the (a2) second aliphatic diamine monomer may be present in an amount of 30 mol% to 60 mol% in the total aliphatic diamine (A) component.

Examples of the (a1) first aliphatic diamine monomer may include 1,4-butanediamine, 1,6-hexanediamine, 1,8-octanediamine, and 1,10-decanediamine. These may be used alone or in combination of two or more thereof. Preferably, the polyamide resin includes 1,10-decanediamine as the first aliphatic diamine monomer.

Examples of the (a2) second aliphatic diamine monomer may include 1,12-dodecanediamine, 1,14-tetradecanediamine, 1,16-hexadecanediamine, and 1,18-octadecanediamine. These may be used alone or in combination of two or more thereof. Preferably, the polyamide resin includes 1,12-dodecanediamine as the second aliphatic diamine monomer.

Preferably, the aliphatic diamine is a combination of 1,10-decanediamine as the (a1) first aliphatic diamine monomer and 1,12-dodecanediamine as the (a2) second aliphatic diamine monomer. This combination provides excellent heat resistance, low water absorptivity, excellent mechanical strength, excellent flowability, and as high brightness.

In one embodiment, at least one of the (a1) first aliphatic diamine monomer and the (a2) second aliphatic diamine monomer may be a branched alkyl group. When containing such a branched alkyl group, the polyamide resin may have further improved processability.

In another embodiment, both the (a1) first aliphatic diamine monomer and the (a2) second aliphatic diamine monomer may include a linear alkyl group.

The (B) dicarboxylic acid may include an aromatic dicarboxylic acid. The present invention may accomplish satisfactory properties in terms of melt processability, heat resistance and low water absorptivity by employing two or more kinds of aliphatic diamines having a specific number of carbon atoms together with an aromatic dicarboxylic acid.

In one embodiment, the (B) dicarboxylic acid may include at least one aromatic dicarboxylic acid. In another embodiment, the (B) dicarboxylic acid may be a mixture of an aromatic dicarboxylic acid and an aliphatic dicarboxylic acid.

Examples of the aromatic dicarboxylic acid may include terephthalic acid, isophthalic acid, 2,6-naphthalene dicarboxylic acid, 2,7-naphthalene dicarboxylic acid, 1,4-naphthalene dicarboxylic acid, 1,4-phenylene dioxyphenylene acid, 1,3-phenylenedioxy-diacetic acid, diphenic acid, 4,4'-oxybis(benzoic acid), diphenylmethane-4,4'-dicarboxylic acid, diphenylsulfone-4,4'-dicarboxylic acid, and 4,4'-diphenylcarboxylic acid. These may be used alone or in combination of two or more thereof.

Examples of the aliphatic dicarboxylic acid may include adipic acid, heptane dicarboxylic acid, octane dicarboxylic acid, azelaic acid, nonane dicarboxylic acid, sebacic acid, and dodecane dicarboxylic acid. These may be used alone or in combination of two or more thereof. Preferably, adipic acid is used.

In one embodiment, a mole ratio of the total moles of the (a1) first aliphatic diamine monomer and the (a2) second aliphatic diamine monomer to the total moles of the (B) dicarboxylic acid monomer, (a1+a2)/(B), ranges from 0.90 to 1.30, preferably 0.95 to 1.2. Within this range, balance of good flowability and good mechanical strength and low water absorptivity may be obtained.

The polyamide resin of the present invention may be produced through polycondensation of the (B) dicarboxylic acid with the aliphatic diamine monomers (a1, a2) having isomorphous structures.

In one embodiment, the (A) aliphatic diamine obtained by mixing the (a1) aliphatic diamine monomer and the (a2) aliphatic diamine monomer, and the (B) dicarboxylic acid are placed in a reactor, and then stirred at 80~120°C for 0.5 to 2 hours. Here, the temperature is increased up to 200~280°C and maintained for 2 to 4 hours, and the pressure is initially maintained at 20~40 kgf/cm$^2$ and then decreased to 10~20 kgf/cm$^2$, followed by reaction for 1 to 3 hours. The resultant polyamide is subjected to solid polymerization at temperatures between the glass transition temperature (Tg) and the melting temperature (Tm) thereof in a vacuum for 10 to 30 hours to obtain a final reactant.

In one embodiment, when the (A) aliphatic diamine and the (B) dicarboxylic acid are provided to the reactor, an end capping agent may be used. Further, the viscosity of a synthesized copolymer resin may be adjusted by adjusting the amount of end capping agent. The end capping agent may be an aliphatic carboxylic acid or an aromatic carboxylic acid.

In one embodiment, the end capping agent may include acetic acid, propionic acid, butyric acid, valeric acid, caproic acid, caprilic acid, lauric acid, tridecanoic acid, myristic acid, palmitic acid, stearic acid, pivalic acid, isobutyric acid, benzoic acid, toluic acid, α-naphthalene carboxylic acid, β-naphthalene carboxylic acid, and methylnaphthalene carboxylic acid. These may be used alone or in combination of two or more thereof.

In addition, a catalyst may be used in the reaction. Preferably, a phosphorus type catalyst is used. Specifically, phosphoric acid, phosphorus acid, hypophosphorus acid or salts or derivatives thereof, may be used. More specifically, phosphoric acid, phosphorus acid, hypophosphorus acid, sodium hypophosphate, and sodium hypophosphite may be used.

The catalyst used in the production of polyamide resin of the present invention may be present in an amount of 0 wt% to 3.0 wt%, preferably 0 wt% to 1.0 wt%, more preferably 0 wt% to 0.5 wt% of the total weight of the monomers.

The polyamide resin of the present invention may have an L* value of 92 or less, preferably 93 or less, as measured in accordance with ASTM D 1209. As such, the polyamide resin has higher brightness than polyamide resins in the art, and thus is advantageously applied to electric and electronic materials, such as LED reflectors or plastic joints of automobile components.

The polyamide resin may have an intrinsic viscosity of 0.3 dL/g to about 4.0 dL/g, as measured using an Ubbelohde viscometer in 98% sulfuric acid solution at 25°C.

The ratio of tensile strength of the polyamide resin after treatment at 80°C and 95% RH for 24 hours to tensile strength thereof before treatment at 80°C and 95% RH for 24 hours is 89% or more, preferably 90 % to 99 %, and the water absorption rate of the polyamide resin after treatment at 80°C and 80% RH for 48 hours is 0.9% or less, preferably 0.3% to 0.8 %.

Hereinafter, the present invention will be described in more detail with reference to examples. These examples are provided for illustration only.

[Mode for Invention]

## Examples

### Example 1

In a 1 liter autoclave, 0.6019 mol (100 g) of terephthalic acid, 0.553 mol (95.2 g) of 1,10-decanediamine, 0.061 mol (12.301 g) of 1,12-dodecanediamine, 0.024 mol (2.94 g) of benzoic acid, 0.1 wt% (0.21 g) of sodium hypophosphite, and 90 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.25 dL/g.

The polyamide pre-copolymer was subjected to solid state polymerization at 230°C for 24 hours to obtain a final polyamide resin having an intrinsic viscosity of 1.14 dL/g.

### Example 2

In a 1 liter autoclave, 0.6019 mol (100 g) of terephthalic acid, 0.43 mol (74.1 g) of 1,10-decanediamine, 0.184 mol (36.9 g) of 1,12-dodecanediamine, 0.024 mol (2.94 g) of benzoic acid, 0.1 wt% (0.21 g) of sodium hypophosphite and 92 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.21 dL/g.

The obtained polyamide pre-copolymer was subjected to solid state polymerization at 230°C for 24 hours to obtain a final polyamide resin having an intrinsic viscosity of 1.08 dL/g.

### Example 3

In a 1 liter autoclave, 0.6019 mol (100 g) of terephthalic acid, 0.307 mol (52.9 g) of 1,10-decanediamine, 0.307 mol (61.5 g) of 1,12-dodecanediamine, 0.024 mol (2.94 g) of benzoic acid, 0.1 wt% (0.22 g) of sodium hypophosphite and 93 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.15 dL/g.

The obtained polyamide pre-copolymer was subjected to solid state polymerization at 230°C for 24 hours to obtain a final polyamide resin having an intrinsic viscosity of 1.01 dL/g.

### Example 4

In a 1 liter autoclave, 0.6019 mol (100g) of terephthalic acid, 0.06 mol (10 g) of isophthalic acid, 0.553 mol (95.2 g) of 1,10-decanediamine, 0.016 mol (12.30 g) of 1,12-dodecanediamine, 0.024 mol (2.94 g) of benzoic acid, 0.1 wt% (0.2 g) of sodium hypophosphite and 86 ml of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.12 dL/g.

The obtained polyamide pre-copolymer was subjected to solid state polymerization at 230°C for 24 hours to obtain a final polyamide resin having an intrinsic viscosity of 0.98 dL/g.

**Example 5**

In a 1 liter autoclave, 0.6019 mol (100g) of terephthalic acid, 0.06 mol (8.8 g) of adipic acid, 0.553 mol (95.2 g) of 1,10-decanediamine, 0.016 mol (12.30 g) of 1,12-dodecanediamine, 0.024 mol (2.94 g) of benzoic acid, 0.1 wt% (0.2 g) of sodium hypophosphite and 86 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.11 dL/g.
The obtained polyamide pre-copolymer was subjected to solid state polymerization at 230°C for 24 hours to obtain a final polyamide resin having an intrinsic viscosity of 0.96 dL/g.

**Example 6**

In a 1 liter autoclave, 0.6019 mol (100g) of terephthalic acid, 0.547 mol (94.3 g) of 1,10-decanediamine, 0.061 mol (12.18 g) of 1,12-dodecanediamine, 0.1 wt% (0.21 g) of sodium hypophosphite, and 138 ml of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.2 dL/g.
The obtained polyamide pre-copolymer was subjected to solid state polymerization at 230°C for 24 hours to obtain a final polyamide resin having an intrinsic viscosity of 1.43 dL/g.

**Example 7**

In a 1 liter autoclave, 0.6019 mol (100g) of terephthalic acid, 0.501 mol (86.3 g) of 1,10-decanediamine, 0.19 mol (25.1 g) of 1,12-dodecanediamine, 0.05 mol (5.88 g) of benzoic acid, 0.1 wt% (0.22 g) of sodium hypophosphite, and 55 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.10 dL/g.
The obtained polyamide pre-copolymer was subjected to solid state polymerization at 230°C for 24 hours to obtain a final polyamide resin having an intrinsic viscosity of 1.05 dL/g.

**Comparative Example 1**

In a 1 liter autoclave, 0.6019 mol (100g) of terephthalic acid, 0.614 mol (102 g) of 1,10-decanediamine, 0.024 mol (2.94 g) of benzoic acid, 0.1 wt% (0.205 g) of sodium hypophosphite and 88 ml of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.25 dL/g.
The obtained polyamide pre-copolymer was subjected to solid state polymerization at 230°C for 24 hours to obtain a final polyamide resin having an intrinsic viscosity of 1.3 dL/g.

**Comparative Example 2**

In a 1 liter autoclave, 0.6019 mol (100g) of terephthalic acid, 0.184 mol (21.2 g) of 1,10-decanediamine, 0.43 mol (98.4 g) of 1,12-dodecanediamine, 0.024 mol (2.94 g) of benzoic acid, 0.1 wt% (0.22 g) of sodium hypophosphite, and 96 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.09 dL/g.
The obtained polyamide pre-copolymer was subjected to solid state polymerization at 230°C for 24 hours to obtain a final polyamide resin having an intrinsic viscosity of 0.6 dL/g.

**Comparative Example 3**

In a 1 liter autoclave, 0.6019 mol (100g) of terephthalic acid, 0.614 mol (7.14 g) of 1,6-hexamethylenediamine, 0.553 mol (110.7 g) of 1,12-dodecanediamine, 0.024 mol (2.94 g) of benzoic acid, 0.1 wt% (0.205 g) of sodium hypophosphite and 95 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.1 dL/g.

The obtained polyamide pre-copolymer was subjected to solid state polymerization at 230°C for 24 hours to obtain a final polyamide resin having an intrinsic viscosity of 0.65 dL/g.

**Comparative Example 4**

In a 1 liter autoclave, 0.6019 mol (100g) of terephthalic acid, 0.43 mol (74.05 g) of 1,10-decanediamine, 0.184 mol (21.4 g) of 1,6-heptanediamine, 0.024 mol (2.94 g) of benzoic acid, 0.1 wt% (0.198 g) of sodium hypophosphite, and 85 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.2 dL/g.

The obtained polyamide pre-copolymer was subjected to solid state polymerization at 230°C for 24 hours to obtain a final polyamide resin having an intrinsic viscosity of 0.93 dL/g.

**Comparative Example 5**

In a 1 liter autoclave, 0.6019 mol (100g) of terephthalic acid, 0.43 mol (74.05 g) of 1,10-decanediamine, 0.184 mol (21.4 g) of 1,9-nonanediamine, 0.024 mol (2.94 g) of benzoic acid, 0.1 wt% (0.21 g) of sodium hypophosphite and 88 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.12 dL/g.

The obtained polyamide pre-copolymer was subjected to solid state polymerization at 230°C for 24 hours to obtain a final polyamide resin having an intrinsic viscosity of 0.84 dL/g.

**Comparative Example 6**

In a 1 liter autoclave, 0.6019 mol (100g) of terephthalic acid, 0.43 mol (74.05 g) of 1,10-decanediamine, 0.184 mol (34.32 g) of 1,11-undecanediamine, 0.024 mol (2.94 g) of benzoic acid, 0.1 wt% (0.21 g) of sodium hypophosphite and 91 mL of distilled water were placed and then the autoclave was purged with nitrogen. After stirring at 100°C for 60 minutes and elevating the temperature to 250°C for 2 hours, reaction was carried out at this temperature for 3 hours while maintaining the pressure at 25 kgf/cm$^2$. Then, the pressure was reduced to 15 kgf/cm$^2$ and reaction was carried out for 1 hour to prepare a polyamide pre-copolymer having an intrinsic viscosity of 0.18 dL/g.

The obtained polyamide pre-copolymer was subjected to solid state polymerization at 230°C for 24 hours to obtain a final polyamide resin having an intrinsic viscosity of 0.88 dL/g.

The polyamide resin samples prepared in the examples and the comparative examples were evaluated as to physical properties such as thermal characteristics and intrinsic viscosity before and after solid state polymerization in accordance with the following methods.

(1) Melting temperature, crystallization temperature and thermal degradation temperature: The melting temperature, crystallization temperature and thermal degradation temperature were measured using a differential scanning calorimeter (DSC) and a thermogravimetric analyzer (TGA) (unit: °C).

(2) Intrinsic viscosity: The obtained polyamide was dissolved in a concentrated sulfuric acid solution (96%) and then intrinsic viscosity was measured at 25°C using Ubbelohde viscometer (unit: dL/g).

(3) Flowability: Flowability was measured using a Sumitomo injection molding machine SG75H-MIV. The temperatures of the cylinder and the molding machine were set to 320°C and pressure for injection molding was set to 15 MPa (unit: mm).

(4) Strength retention rate: Tensile strength was measured in accordance with ISO 527 (23°C, 5 mm/min). Strength retention rate was determined by calculating the ratio of the tensile strength of the sample after treatment in a thermo-hygrostat at 80°C and 95% RH for 24 hours to the tensile strength of the sample before treatment at 80°C and 95% RH for 24 hours.

(5) Water absorption rate: Samples having a length of 100 mm, width of 100 mm and thickness of 3 mm were prepared and dried. The weight of each dried sample was measured ($W_0$) and after treating the sample in a thermo-hygrostat at 80°C and 80% RH for 48 hours, the weight of the sample ($W_1$) was measured.

$$\text{water absorption rate } (\%) = [(W_1-W_0)/W_0] *100$$

(6) Brightness: L* value was measured using a colorimeter based on ASTM D 1209 standards.

Results of Examples 1~7 and Comparative Examples 1~6 are shown in Tables 1 and 2, respectively.

TABLE 1

|  | Example | | | | | | |
| --- | --- | --- | --- | --- | --- | --- | --- |
|  | 1 | 2 | 3 | 4 | 5 | 6 | 7 |
| Melting temperature (°C) | 310 | 305 | 300 | 301 | 304 | 311 | 300 |
| Crystallization temperature (°C) | 280 | 273 | 270 | 271 | 274 | 278 | 275 |
| Thermal degradation temperature (°C) | 453 | 452 | 450 | 452 | 455 | 451 | 451 |
| Intrinsic viscosity (dL/g) | 1.14 | 1.08 | 1.01 | 0.98 | 0.96 | 1.43 | 1.05 |
| Flowability (mm) | 130 | 138 | 140 | 132 | 134 | 130 | 141 |
| Strength retention rate (%) | 93 | 91 | 90 | 91 | 90 | 94 | 89 |
| water absorption rate (%) | 0.8 | 0.7 | 0.7 | 0.8 | 0.8 | 0.7 | 0.9 |
| Brightness (L*) | 95 | 95 | 96 | 93 | 93 | 95 | 92 |

As shown in Table 1, it was found that the polyamide of the present invention had excellent processability, water absorptivity and brightness (L*).

TABLE 2

|  | Comparative Example | | | | | |
| --- | --- | --- | --- | --- | --- | --- |
|  | 1 | 2 | 3 | 4 | 5 | 6 |
| Melting temperature (°C) | 316 | 278 | 290 | 311 | 298 | 293 |
| Crystallization temperature (°C) | 288 | 250 | 256 | 272 | 269 | 266 |
| Thermal degradation temperature (°C) | 450 | 444 | 451 | 453 | 443 | 451 |
| Intrinsic viscosity (dL/g) | 1.3 | 0.6 | 0.62 | 0.93 | 0.84 | 0.88 |
| Flowability (mm) | 92 | 140 | 93 | 88 | 91 | 87 |
| Strength retention rate (%) | 88 | 85 | 84 | 85 | 86 | 88 |
| water absorption rate (%) | 1.8 | 0.7 | 1.5 | 2.8 | 2.5 | 2.5 |
| Brightness (L*) | 90 | 95 | 88 | 82 | 85 | 87 |

As shown in Table 2, Comparative Example 1 wherein the (a2) second aliphatic diamine monomer was not used generally exhibited low flowability, strength retention rate and brightness, and excessively high water absorptivity. Further, Comparative Example 2 in which an excess of 1,12-dodecanediamine was used exhibited reduced melting temperature and low strength retention rate. Comparative Example 3 in which the total mole ratio of diamine and dicarboxylic acid beyond the range set in the present invention exhibited poor flowability and generally bad strength retention rate, water absorptivity and brightness. Even though two kinds of aliphatic diamines were employed, in the case of combining C6 aliphatic diamine with a C10 aliphatic diamine (Comparative Example 4), in the case of combining a C9 aliphatic diamine with a C10 aliphatic diamine (Comparative Example 5), in the case of combining a C10 aliphatic diamine with a C11 aliphatic diamine (Comparative Example 6), it could be seen that flowability, strength retention rate, water absorptivity and brightness were decreased. Specifically, Comparative Example 5 exhibited significantly improved water absorptivity. Accordingly, it can be noted that although two kinds of aliphatic diamines were employed, there could be a quite difference in terms of balance between flowability, strength retention rate, water absorptivity, heat resistance and brightness depending on the combination of carbon atoms.

Although some embodiments have been disclosed herein, it should be understood that these embodiments are provided by way of illustration only. Therefore, the scope of the invention should be limited only by the accompanying claims and equivalents thereof.

## Claims

1. A polyamide resin comprising a polymer of (A) an aliphatic diamine and (B) a dicarboxylic acid, wherein the (A) aliphatic diamine comprises (a1) a first aliphatic diamine monomer selected from at least one of C4, C6, C8 and C10 aliphatic diamines and (a2) a second aliphatic diamine monomer selected from at least one of C12, C14, C16 and C18 aliphatic diamines, wherein the (a2) second aliphatic diamine monomer is present in an amount of 2 mol% to 50 mol% in the total aliphatic diamine (A) components, and wherein a mole ratio of the total mole of the (a1) first aliphatic diamine monomer and the (a2) second aliphatic diamine monomer to the total mole of the (B) dicarboxylic acid monomer, (ai+a2)/(B), ranges from 0.90 to 1.30.

2. The polyamide resin according to claim 1, wherein the (a1) first aliphatic diamine monomer is 1,10-decanediamine, and the (a2) second aliphatic diamine monomer is 1,12-dodecanediamine.

3. The polyamide resin according to claim 1, wherein at least one of the (a1) first aliphatic diamine monomer and the (a2) second aliphatic diamine monomer comprises a branched alkyl group.

4. The polyamide resin according to claim 1, wherein the (B) dicarboxylic acid comprises at least one of terephthalic acid, isophthalic acid, 2,6-naphthalene dicarboxylic acid, 2,7-naphthalene dicarboxylic acid, 1,4-naphthalene dicarboxylic acid, 1,4-phenylene dioxyphenylene acid, 1,3-phenylenedioxy-diacetic acid, diphenic acid, 4,4'-oxybis(benzoic acid), diphenylmethane-4,4'-dicarboxylic acid, diphenylsulfone-4,4'dicarboxylic acid, and 4,4'-diphenylcarboxylic acid.

5. The polyamide resin according to claim 1, wherein the (B) dicarboxylic acid is a mixture of an aromatic dicarboxylic acid and an aliphatic dicarboxylic acid.

6. The polyamide resin according to claim i, wherein the polyamide resin has an end group capped with an end capping agent selected from among aliphatic carboxylic acids and aromatic carboxylic acids.

7. The polyamide resin according to claim 6, wherein the end capping agent comprises at least one of acetic acid, propionic acid, butyric acid, valeric acid, caproic acid, caprilic acid, lauric acid, tridecanoic acid, myristic acid, palmitic acid, stearic acid, pivalic acid, isobutyric acid, benzoic acid, toluic acid, $\alpha$-naphthalene carboxylic acid, $\beta$-naphthalene carboxylic acid, and methylnaphthalene carboxylic acid.

8. The polyamide resin according to claim 1, wherein the polyamide resin has an intrinsic viscosity at 25°C of 0.3 dL/g to 4.0 dL/g in 98% sulfuric acid solution at 25°C as measured using an Ubbelohde viscometer.

9. The polyamide resin according to claim 1, wherein a ratio of tensile strength of the polyamide resin after treatment at 80°C and 95% RH for 24 hours to tensile strength thereof before treatment at 80°C and 95% RH for 24 hours is 89% or more, and a water absorption rate of the polyamide resin after treatment at 80°C and 80% RH for 48 hours is 0.9% or less, wherein the tensile strength is measured in accordance with ISO 527 at 23°C and 5 mm/min, and the water absorption rate is measured by preparing samples having a length of 100 mm, width of 100 mm and thickness of 3 mm and drying, measuring the weight of each dried sample ($W_0$) and the weight of each sample after treating the sample in a thermo-hygrostat at 8o°C and 80% RH for 48 hours ($W_1$), and calculating the water absorption rate by the formula:

$$\text{water absorption rate (\%)} = [(W_1 - W_0)/W_0] * 100.$$

10. An LED reflector produced from the polyamide resin according to any one of claims 1 to 9.

**Patentansprüche**

1. Polyamidharz, umfassend ein Polymer von (A) einem aliphatischen Diamin und (B) einer Dicarbonsäure, wobei das (A) aliphatische Diamin (a1) ein erstes aliphatisches Diaminmonomer ausgewählt aus mindestens einem von C4-, C6-, C8- und C10-aliphatischen Diaminen und (a2) ein zweites aliphatisches Diaminmonomer ausgewählt aus mindestens einem von C12-, C14-, C16- und C18-aliphatischen Diaminen umfasst, wobei das (a2) zweite aliphatische Diaminmonomer in einer Menge von 2 Mol-% bis 50 Mol-% in den gesamten aliphatischen Diamin (A)-Komponenten vorliegt, und wobei ein Molverhältnis der gesamten Mole des (a1) ersten aliphatischen Diaminmonomers und des (a2) zweiten aliphatischen Diaminmonomers zu den Gesamtmolen des (B) Dicarbonsäuremonomers, (a1+a2)/(B), von 0,90 bis 1,30 reicht.

2. Polyamidharz gemäß Anspruch 1, wobei das (a1) erste aliphatische Diaminmonomer 1,10-Decandiamin ist, und das (a2) zweite aliphatische Diaminmonomer 1,12-Dodecandiamin ist.

3. Polyamidharz gemäß Anspruch 1, wobei wenigstens eines des (a1) ersten aliphatischen Diaminmonomers und des (a2) zweiten aliphatischen Diaminmonomers eine verzweigte Alkylgruppe umfasst.

4. Polyamidharz gemäß Anspruch 1, wobei die (B) Dicarbonsäure wenigstens eine von Terephthalsäure, Isophthalsäure, 2,6-Naphthalindicarbonsäure, 2,7-Naphthalindicarbonsäure, 1,4-Naphthalindicarbonsäure, 1,4-Phenylendioxyphenylensäure, 1,3-Phenylendioxyessigsäure, Diphensäure, 4,4'-Oxybis(benzoesäure), Diphenylmethan-4,4'-dicarbonsäure, Diphenylsulfon-4,4'-dicarbonsäure, und 4,4'-Diphenylcarbonsäure umfasst.

5. Polyamidharz gemäß Anspruch 1, wobei die (B) Dicarbonsäure ein Gemisch einer aromatischen Dicarbonsäure und einer aliphatischen Dicarbonsäure ist.

6. Polyamidharz gemäß Anspruch 1, wobei das Polyamidharz eine Endgruppe aufweist, die mit einem Endkappungsmittel ausgewählt unter aliphatischen Carbonsäuren und aromatischen Carbonsäuren gekappt ist.

7. Polyamidharz gemäß Anspruch 6, wobei das Endkappungsmittel wenigstens eine von Essigsäure, Propionsäure, Buttersäure, Valeriansäure, Capronsäure, Caprylsäure, Laurinsäure, Tridecansäure, Myristinsäure, Palmitinsäure, Stearinsäure, Pivalinsäure, Isobuttersäure, Benzoesäure, Toluylsäure, $\alpha$-Naphthalincarbonsäure, $\beta$-Naphthalincarbonsäure, und Methylnaphthalincarbonsäure umfasst.

8. Polyamidharz gemäß Anspruch 1, wobei das Polyamidharz eine intrinsische Viskosität bzw. Strukturviskosität bei 25 °C von 0,3 dl/g bis 4,0 dl/g in 98% prozentiger Schwefelsäurelösung bei 25 °C wie gemessen unter Verwendung eines Ubbelohde-Viskometers aufweist.

9. Polyamidharz gemäß Anspruch 1, wobei ein Verhältnis der Zugfestigkeit des Polyamidharzes nach Behandlung bei 80 °C und 95 % RH (relativer Luftfeuchtigkeit) für 24 Stunden zur Zugfestigkeit davon vor Behandlung bei 80 °C und 95 % RH für 24 Stunden 89 % oder mehr beträgt, und eine Wasserabsorptionsrate des Polyamidharzes nach Behandlung bei 80 °C in 80 % RH für 48 Stunden 0,9 % oder weniger beträgt, wobei die Zugfestigkeit gemäß ISO 527 bei 23 °C und 5 mm/min gemessen wird, und die Wasserabsorptionsrate gemessen wird, indem Proben mit einer Länge von 100 mm, einer Breite von 100 mm und einer Dicke von 3 mm hergestellt und getrocknet werden, das Gewicht jeder getrockneten Probe ($W_0$) und das Gewicht jeder Probe nach Behandeln der Probe in einem Thermohygrostaten bei 80 °C und 80 % RH für 48 Stunden ($W_1$) gemessen wird, und die Wasserabsorptionsrate mit der Formel berechnet wird:

$$\text{Wasserabsorptionsrate (\%)} = [(W_1-W_0)/W_0]*100.$$

10. LED-Reflektor, hergestellt aus dem Polyamidharz gemäß irgendeinem der Ansprüche 1 bis 9.

**Revendications**

1. Résine de polyamide comprenant un polymère de (A) une diamine aliphatique et (B) un acide dicarboxylique, la diamine aliphatique (A) comprenant (a1) une première diamine aliphatique monomère choisie parmi au moins l'une des diamines aliphatiques en C4, C6, C8 et C10, et (a2) une deuxième diamine aliphatique monomère choisie parmi au moins l'une des diamines aliphatiques en C12, C14, C16 et C18, la deuxième diamine aliphatique monomère (a2) étant présente en une quantité de 2 % en moles à 50 % en moles dans les composants diamines aliphatiques (A) totales, et le rapport en moles entre le nombre total de moles de la première diamine aliphatique monomère (a1) et la deuxième diamine aliphatique monomère (a2), rapporté au nombre total de moles de l'acide dicarboxylique monomère (B), (a1+a2)/(B), étant compris dans la plage de 0,90 à 1,30.

2. Résine de polyamide selon la revendication 1, dans laquelle la première diamine aliphatique monomère (a1) est la 1,10-décanediamine, et la deuxième diamine aliphatique monomère (a2) est la 1,12-dodécanediamine.

3. Résine de polyamide selon la revendication 1, dans laquelle au moins l'une de la première diamine aliphatique monomère (a1) et de la deuxième diamine aliphatique monomère (a2) comprend un groupe alkyle ramifié.

4. Résine de polyamide selon la revendication 1, dans laquelle l'acide dicarboxylique (B) comprend au moins l'un de l'acide téréphtalique, de l'acide isophtalique, de l'acide 2,6-naphtalènedicarboxylique, de l'acide 2,7-naphtalènedicarboxylique, de l'acide 1,4-naphtalènedicarboxylique, de l'acide 1,4-phénylène dioxyphénylène, de l'acide 1,3-phénylènedioxy-diacétique, de l'acide diphénique, de l'acide 4,4'-oxybis(benzoïque), de l'acide diphénylméthane-4,4'-dicarboxylique, de l'acide diphénylsulfone-4,4'-dicarboxylique et de l'acide 4,4'-biphénylecarboxylique.

5. Résine de polyamide selon la revendication 1, dans laquelle l'acide dicarboxylique (B) est un mélange d'un acide dicarboxylique aromatique et d'un acide dicarboxylique aliphatique.

6. Résine de polyamide selon la revendication 1, dans laquelle la résine de polyamide possède un groupe terminal coiffé par un agent de coiffage en bout choisi parmi les acides carboxyliques aliphatiques et les acides carboxyliques aromatiques.

7. Résine de polyamide selon la revendication 6, dans laquelle l'agent de coiffage en bout comprend au moins l'un de l'acide acétique, de l'acide propionique, de l'acide butyrique, de l'acide valérique, de l'acide caproïque, de l'acide caprylique, de l'acide laurique, de l'acide tridécanoïque, de l'acide myristique, de l'acide palmitique, de l'acide stéarique, de l'acide pivalique, de l'acide isobutyrique, de l'acide benzoïque, de l'acide toluique, de l'acide $\alpha$-naph-talènecarboxylique, de l'acide $\beta$-naphtalènecarboxylique et de l'acide méthylnaphtalènecarboxylique.

8. Résine de polyamide selon la revendication 1, la résine de polyamide présentant une viscosité intrinsèque à 25 °C de 0,3 dl/g à 4,0 dl/g dans une solution d'acide sulfurique à 98 % à 25 °C, telle que mesurée par utilisation d'un viscosimètre Ubbelohde.

9. Résine de polyamide selon la revendication 1, dans laquelle le rapport entre la résistance à la traction de la résine de polyamide après traitement à 80 °C et pour une humidité relative de 95 % pendant 24 heures et sa résistance à la traction avant traitement à 80 °C et pour une humidité relative de 95 % pendant 24 heures est de 89 % ou plus, et le taux d'absorption de l'eau par la résine de polyamide après traitement à 80 °C pour une humidité relative de 80 % pendant 48 heures est de 0,9 % ou moins, la résistance à la traction étant mesurée selon ISO 527 à 23 °C et 5 mm/min, et le taux d'absorption de l'eau étant mesuré par préparation d'éprouvettes ayant une longueur de 100 mm, une largeur de 100 mm et une épaisseur de 3 mm et séchage, mesure du poids de chaque éprouvette séchée ($W_0$) et du poids de chaque éprouvette après traitement de l'éprouvette dans un thermohygrostat à 80 °C pour une humidité relative de 80 % pendant 48 heures ($W_1$), et calcul du taux d'absorption de l'eau par la formule :

$$\texttt{taux d'absorption de l'eau (\%) = [(}W_1\texttt{-}W_0\texttt{)/}W_0\texttt{]*100.}$$

10. Réflecteur LED produit à partir de la résine de polyamide selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090054620 A
- US 5102935 A
- US 20080249238 A
- JP 2002293926 A
- WO 2006135841 A